# EUROPÄISCHE PATENTSCHRIFT

(11) **EP 2 570 096 B1**
(45) Veröffentlichungstag und Bekanntmachung des Hinweises auf die Patenterteilung: **07.05.2014**
(21) Anmeldenummer: 11181245.9
(22) Anmeldetag: 14.09.2011
(51) Int. Cl.: A61C 8/00

(54) **Kieferimplantat**
Dental implant
Implant dentaire

(43) Veröffentlichungstag der Anmeldung: 20.03.2013
(73) Patentinhaber: Abboud, Marcus, Setauket NY 11733 (US)
(72) Erfinder: Abboud, Marcus, Setauket NY 11733 (US)
(74) Vertreter: Eberlein, Jasper

(56) Entgegenhaltungen:
- EP-A2- 0 198 306
- US-A1- 2011 027 756

## Beschreibung

Die Erfindung bezieht sich auf ein dentales Kieferimplantat zum Tragen eines Implantataufbaus.

Ein dentales Kieferimplantat ist der Teil einer dentalen Implantat-Anordnung, der unmittelbar in den Patientenkiefer implantiert wird, um einen Implantataufbau zu tragen.

Im Allgemeinen wird für die gesamte Implantat-Anordnung ein geradliniger Aufbau angestrebt, d. h. das Kieferimplantat und der Implantataufbau liegen In derselben Axialen. Allerdings lassen es der Kieferknochen des Patienten, die darin verlaufenden Nervenbahnen und andere Randbedingungen nicht immer zu, das Kieferimplantat stets ungefähr quer zur Bissebene in den Kieferknochen zu implantieren, Wenn das Kieferimplantat geneigt zu der Bissebene implantiert wird, muss der Implantataufbau entsprechend geneigt an dem Kieferimplantat fixiert werden.

Eine dentale Implantat-Anordnung mit einem zum Kieferimplantat geneigten Implantataufbau ist beispielsweise aus EP 0 449 334 A1 bekannt, wobei der Implantatkörper an seinem Kopfende eine Öffnung aufweist, deren Öffnungsebene typischerweise in einem Neigungswinkel von 75° bis 45° zur Axialen geneigt ist. Problematisch ist bei geneigten Implantataufbauten die nicht-axiale Krafteinleitung In das Kieferimplantat, für die insbesondere die herkömmlichen Schraubgewinde an der Außenseite des Implantatkörpers nicht besonders geeignet sind.

Aus US 2011/0027756 A1 ist ein weiteres Kieferimplantat mit einer zur Querebene geneigten Öffnungsebene offenbart, wobei das Schraubgewinde eine kontinuierliche Schraubenlinie und der Gewindesteg einen keilartigen Querschnitt aufweist.

Aufgabe der Erfindung ist es, ein Kieferimplantat für eine geneigte bzw. geknickte Implantat-Anordnung mit verbesserter Abstützung im Patientenkiefer zu schaffen.

Diese Aufgabe wird erfindungsgemäß gelöst mit einem Kieferimplantat mit den Merkmalen des Anspruchs 1.

Das erfindungsgemäße Kieferimplantat besteht aus einem Implantatkörper, der, in axialer Richtung gesehen, ein Kopfende zur Befestigung des prothetischen Implantataufbaus und an seinem anderen axialen Ende ein Fußende zum Einsetzen in den Patientenkiefer aufweist. An dem Kopfende weist der Implantatkörper eine ovale Öffnung mit einem Öffnungsrand auf, wobei der Öffnungsrand in einer Öffnungsebene liegt, die mit einem Neigungswinkel von 75° bis 45° zur Axialen des Implantatkörpers geneigt ist, so dass die Öffnungsebene ist in einem Winkel von 15° bis 45° zur Querebene des Implantatkörpers geneigt ist. Der Implantatkörper weist also an seinem Kopfende einen abgeschrägten Abschluss auf, so dass der Implantataufbau mit dem Neigungswinkel auf den Imprantatkörper aufgesetzt werden kann, mit dem die Öffnungsebene zur Implantatkörper-Querebene geneigt ist. Da der Implantatkörper an seinem kopfseitigen Ende abgeschrägt ist, weist er an seinem Umfang eine Seite auf, an der er seine maximale axiale Erstreckung aufweist, und eine dieser Seite gegenüberliegende Seite auf, an der er seine minimale axiale Erstreckung aufweist. Der von der Öffnungsebene und der Umfangsfläche des Implantatkörpers eingeschlossene Winkel ist an der Langseite spitzwinkelig und an der Kurzseite stumpfwinkelig.

Der Implantatkörper weist außenseitig eine Gewindestruktur zum Einschrauben des Implantatkörpers in einen Kieferknochen auf. Eine Gewindestruktur ist in der Praxis für das Einsetzen des Implantatkörpers in dem Patientenkiefer einerseits und für das Einwachsen des Implantatkörpers in den Patientenkiefer andererseits besonders vorteilhaft.

Die Gewindestruktur wird im Wesentlichen von einem Gewindesteg gebildet, der seitlich von einem Körperkern abragt und in einer kontinuierlichen Schraubenlinie mit konstanter Steigung verläuft. Die Neigung des Gewindestegs zur Axialen ist über den Umfang nicht konstant, sondern variiert über den Umfang von 360° jeweils zwischen zwei Extremen. Der Gewindesteg kippt also abhängig von seiner rotatorischen Position am Umfang des Implantatkörpers um eine Nulllage herum, die sich jeweils zwischen der Langseite und der Kurzseite, also am Übergang zwischen der Langseite zur Kurzseite befindet.

Der Gewindesteg ist im Querschnitt keilartig ausgebildet, und weist eine dem Fußende zugewandte Unterseite und eine dem Kopfende zugewandte Oberseite auf. Zwischen der Oberseite und der Unterseite des Gewindestegs ist ein Keilwinkel eingeschlossen. Die Winkelhalbierende des Keilwinkels bildet kopfseitig mit der Axialen des Implantatkörpers einen Kippwinkel, der auf der Langseite des Implantatkörpers kleiner ist als auf der Kurzseite des Implantatkörpers. An der Langseite des Implantatkörpers ist der Gewindesteg stärker zum Kopfende hin verkippt als an der Kurzseite des Implantatkörpers. Insbesondere ist die Unterseite des Gewindestegs auf der Implantatkörper-Langseite stärker zum Kopfende hin geneigt als auf der Kurzseite. Hierdurch weist die Gewindesteg- Unterseite eine größere Parallelität mit der Öffnungsebene auf, als dies der Fall wäre, wenn der Gewindesteg über den Umfang eine konstante Neigung zur Implantatkörper-Axialen aufweisen würde. Im Ergebnis sind die Unterseiten des Gewindestegs auf der Implantatkörper-Langseite jeweils möglichst nahe an der Rechtwinkligkeit zur Krafteinleitungs- Achse, die senkrecht zur Öffnungsebene verläuft. Hierdurch kann die über die Öffnungsebene in den Implantatkörper eingeleitete Kraft durch den Gewindesteg auf der Langseite jeweils großflächiger auf den Kieferknochen übertragen werden als dies der Fall wäre, wenn die Neigung der Gewindesteg-Unterseite über den Umfang konstant wäre. Das gleiche gilt entsprechend für die Gewindesteg-Oberseite an der Implantatkörper-Kurzseite. An der Kurzseite ist die Oberseite des Gewindestegs im Vergleich zur Langseite so verkippt, dass die Oberseite möglichst parallel zur Öffnungsebene angeordnet ist. Hierdurch können in diesem Bereich Drehmomente bzw. die hieraus resultierenden Druckkräfte möglichst großflächig in den Patientenkiefer eingeleitet werden.

Vorzugsweise schließt die Winkelhalbierende des Gewindesteg-Keilwinkels an der Langseite mit der Implantatkörper-Axialen kopfseitig einen Kippwinkel b kleiner als 90° und auf der Kurzseite einen Kippwinkel c größer als 90° ein. Die Winkelhalbierende des Gewindesteg-Keifwinkeis kippt zwischen der Langseite und der Kurzseite beispielsweise zwischen c=105° und b=75°. Bei einem typischen Öffnungsebenen-Neigungswinkel von beispielsweise 30° und einem Keilwinkel von ebenfalls 30° stehen die Langseiten-Unterseiten und die Kurzseiten-Oberseiten jeweils ungefähr parallel zur Öffnungsebene, Zwar könnte diese Geometrie grundsätzlich auch durch einen Gewindesteg mit über den Umfang konstantem Kippwinkel erreicht werden, jedoch hätte dieser Gewindesteg einen relativ hohen Keilwinkel, vorliegend beispielsweise von 60°, so dass ein derartiger Gewindesteg in axialer Richtung relativ viel Platz einnehmen würde. Durch das Verkippen bzw. Verwinden des Gewindestegs über den Umfang können der Keilwinkel des Gewindestegs verkleinert und die Gewindesteigung verringert werden, so dass die Anzahl an Gewindesteg-Abschnitten auf der Langseite bzw. der Kurzseite entsprechend erhöht werden kann. Der Keilwinkel des Gewindestegs ist bevorzugt kleiner als das Doppelte der Neigung der Öffnungsebene zur Querebene.

Gemäß einer bevorzugten Ausgestaltung ist der Gewindesteg-Keitwinkel über den Umfang konstant. Bei ebenfalls konstanter Gewindestegtiefe würde sich das Querschnittsprofil des Gewindestegs daher über mehrere Umläufe des Gewindestegs nicht verändern.

Vorzugsweise sind die Gewindesteg-Oberseite und/oder die Gewindesteg-Unterseite eben ausgebildet, Eine ebene Ausbildung der Gewindesteg-Ober- und Unterseiten bietet die größtmögliche Stützfläche für die Kraftübertragung zwischen dem Implantatkörper und den Patientenkiefer. Gemäß einer bevorzugten Ausgestaltung verjüngt sich der Implantat-Körperkern zum Fußende hin. Besonders bevorzugt vergrößert sich in ähnlichem oder gleichem Maße die Gewindestegtiefe des Gewindestegs zum Fußende hin, so dass besonders bevorzugt der Außenradius des Implantatkörpers über mehrere Umläufe konstant ist, d.h. der Nenndurchmesser des betreffenden Gewindeabschnitts konstant ist.

Verzugweise weist der Implantatkörpers in seinem Kopfende mindestens einen geschlossenen erhabenen Stützring auf, dessen Ringebene parallel zu der Öffnungsebene ist. Dies gewährt in dem Öffnungsebenen-Randbereich eine gute Abstützung des Implantats an dem Patientenkiefer.

Gemäß einer besonders bevorzugten Ausführungsform ist der Gewindesteg im Querschnitt trapezartig ausgebildet, wobei hiermit nicht zwangsweise ein symmetrisches Trapez gemeint ist.

Im Folgenden wird unter Bezugnahme auf die Zeichnungen ein Ausführungsbeispiel der Erfindung näher erläutert.

Es zeigen:
Figur 1 eine Seitenansicht eines Kieferimplantats mit einer geneigten Öffnungsebene,
Figur 2 einen Längsschnitt des Kieferimplantat der Figur 1 in der Schnittebene II - II,

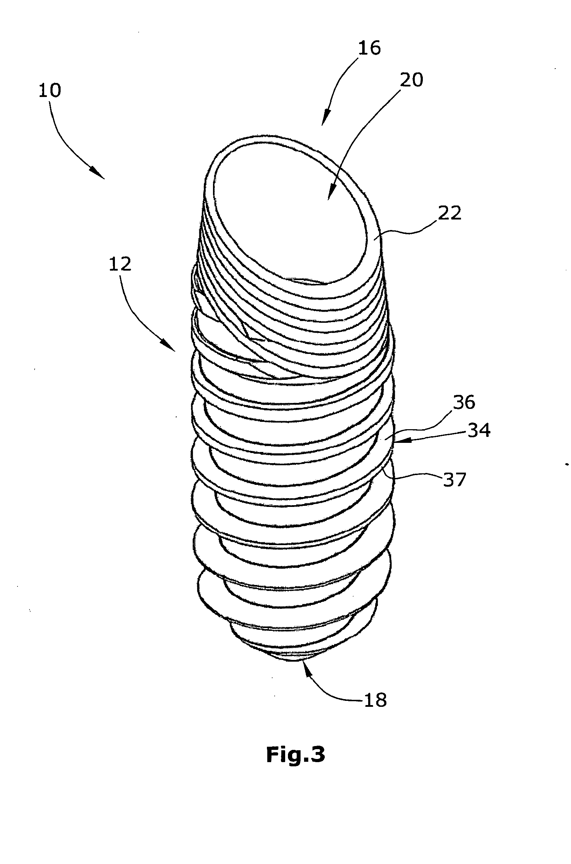

Figur 3 eine perspektivische Ansicht des Kieferimplantat der Figur 1, und
Figur 4 eine schematische Abwicklung des Gewindes des Kieferimplantats der Figur 1.

In den Figuren ist ein angewinkeltes Kieferimplantat 10 dargestellt, das von einem Implantatkörper 12 aus Titan gebildet ist. Das Kieferimplantat 10 kann in einen entsprechend vorgebohrten Patientenklefer eingeschraubt und auf diese Weise implantiert werden. Auf dem implantierten Kieferimplantat 10 kann ein prothetischer Implantataufbau befestigt werden.

Der Implantatkörper 12 weist ein Kopfende 16 zur Befestigung des Implantataufbaus und ein Fußende 18 ein, mit dem der Implantatkörper 12 beim Einschrauben in den Patientenkiefer als Erstes in diesen eintaucht.

An dem Kopfende 16 weist der Implantatkörper 12 eine ovale Öffnung 20 mit einem entsprechend ovalen Öffnungsrand 22 auf. Unterhalb der Öffnung 20 ist in dem Implantatkörper 12 eine Befestigungsstruktur vorgesehen, mit deren Hilfe der Implantataufbau an dem Implantatkörper 12 befestigt werden kann. Der Öffnungsrand 22 liegt in einer Öffnungsebene 24, die mit einem Neigungswinkel a von beispielsweise 60° zur Axialen 14 des Implantatkörpers 12 geneigt ist. Durch die 30°-Neigung der Öffnungsebene 24 im Verhältnis zur Querebene des Implantatkörpers 12 ist die Axiallänge des Implantatkörpers an seinen verschiedenen Umfangseiten verschiedenen groß. Die spitzwinkelige Langseite 28 ist die Seite, an der die Öffnungsebene 24 mit der Umfangsfläche des Implantatkörpers 12 den spitzesten Winkel bildet. Die stupfwinklige Kurzseite 26 ist die Seite, an der die Öffnungsebene 24 mit der Umfangfläche des Implantatkörpers 12 einen stumpfen Winkel einschließt. An der Langseite 12 ist der Implantatkörper 12 länger als an seiner gegenüberliegenden Kurzseite 26.

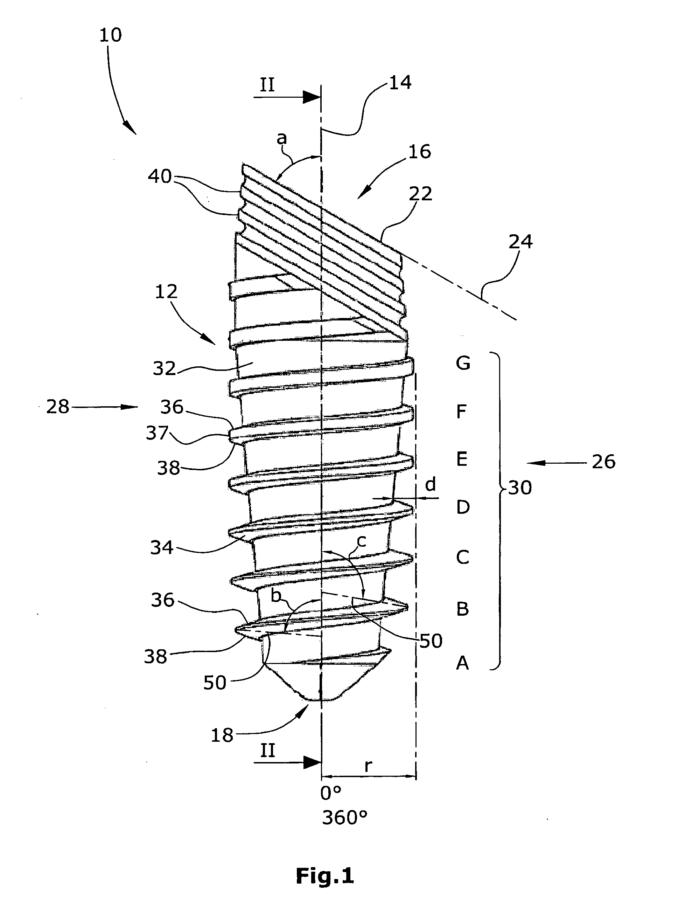

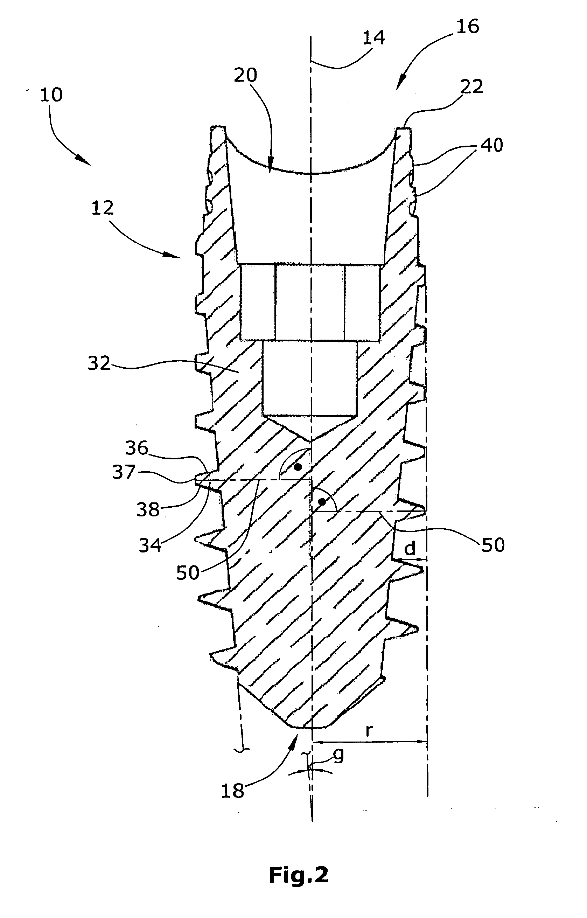

Der Implantatkörper 12 weist eine Gewindestruktur 30 auf, die von einem Gewindesteg 34 mit konstanter Steigung gebildet wird, der um einen Körperkern 32 seitlich von diesem abragend auf einer Schraubenlinie herumläuft. Der Gewindesteg 34 beschreibt ca. sieben vollständige Umläufe, die in Figur 1 mit den Buchstaben A bis G gekennzeichnet sind. Der Gewindesteg 34 ist im Querschnitt keilförmig ausgebildet, wie insbesondere in Figur 2 erkennbar ist. Der Keilwinkel e des im Querschnitt keilförmigen Gewindestegs 34 beträgt ungefähr 30°. Der Gewindesteg 34 weist eine dem Fußende 18 zugewandte ebene Unterseite 38 und eine dem Kopfende 16 zugewandte ebene Oberseite 36 auf. Je nach Gewindestegtiefe d wird der Gewindesteg 34 durch eine Kopffläche 37 abgeschlossen, wobei die Kopfflächen 37 mehrerer Umläufe B bis G in einer einzigen zylinderebene liegen.

Die Winkelhalbierende 50 des Keilwinkels e des Gewindestegs 34 steht nicht in einem konstanten Winkel zur Axialen 14, sondern verändert sich bei jedem Umlauf periodisch. An der Langseite 28 ist die Winkelhalbierende 50 des Gewindestegs 34 in einem Winkel b von 75° zur Axialen 14 geneigt. An der Kurzseite 26 ist die Winkelhalbierende 50 des Gewindestegs 34 in einem Winkel c von 105° zur Axialen geneigt. Zwischen diesen beiden Extremen verändert sich der Winkel des Gewindestegs 34 zu der Axialen 14 kontinuierlich, so dass der Winkel f an den beiden in Figur 2 dargestellten Zwischenpositionen zwischen der Langseite 28 und der Kurzseite 26 exakt 90° beträgt.

In dem Bereich der Gewindestruktur 30 ist der Körperkern 32 nicht zylindrisch, sondern sich kegelartig zum Fußende 18 hin mit einem Kegelwinkel g verjüngend ausgebildet. In dem Maße, in dem sich der Außenradius des Körperkerns 32 zum Fußende 18 hin verringert, vergrößert sich die Gewindestegtiefe d zum Fußende 18 hin, so dass der Außenradius r des Implantatkörpers 12 insgesamt über mehrere Umläufe C bis G praktisch konstant ist, und die Gewindesteg-Kopfflächen 37 mehrerer Umläufe C bis G einen Zylinder beschreiben.

Während die Basis des keilförmigen Gewindestegs 34 über alle Umläufe A bis G unverändert bleibt, ist die Spitze des keilförmigen Gewindestegs 34 mit abnehmender Gewindestegtiefe d immer mehr abgeschnitten, so dass der Gewindesteg 34 in dem kopfseitigen Bereich verringerter Gewindestegtiefe d einen trapezförmigen Querschnitt mit zum Kopfende hin immer größerer axialer Höhe der Kopffläche 37 aufweist.

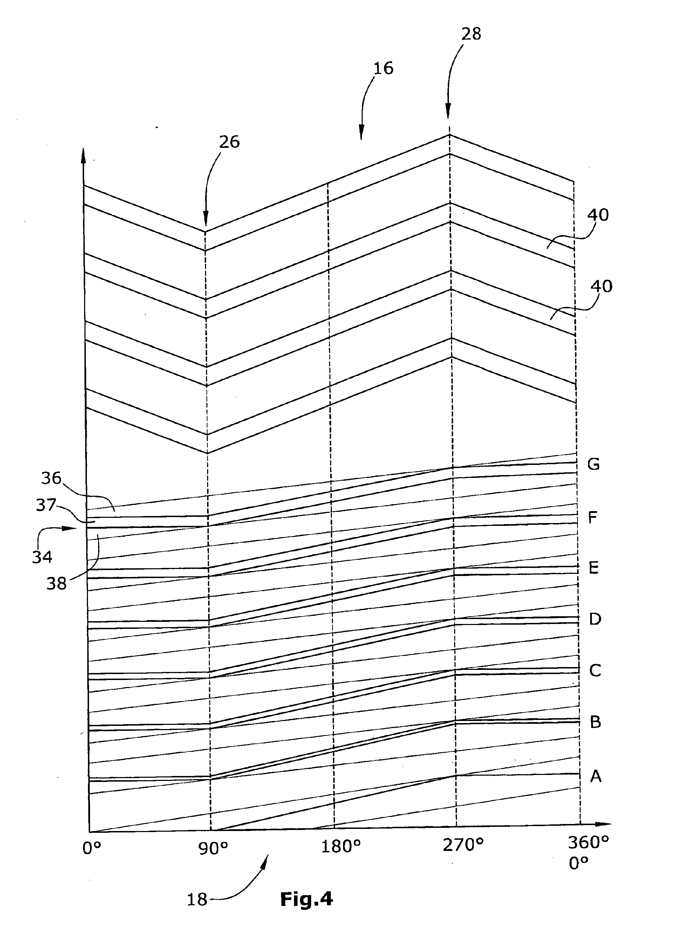

Der Verlauf des Gewindestegs 34 über den Umfang wird an Hand der Figur 4 anschaulich, die eine schematische Abwicklung des Umfangs des Implantatkörpers 12 darstellt. Die dargestellte Abwicklung ist verzerrt, da hierbei die Konitizät des Implantatkörpers 12 ignoriert wurde, und der Implantatkörper hier so dargestellt wird, als wäre er über die gesamte axiale Länge zylindrisch ausgebildet. Ferner sind in der in Figur 4 dargestellten Abwicklung die Übergänge des Gewindestegs 34 und der Stützringe 40 an der Kurzseite 26 und der Langseite 28 sprunghaft dargestellt, wohingegen sie tatsächlich bogenförmig verlaufen, In der Abwicklung ist gut zu erkennen, wie die der Gewindesteg 34 zwischen der Kurzseite 26 und der Langseite 28 verkippt wird, wodurch die Gewindesteg-Kopffläche 37 zwischen dem oberen Ende und dem unteren Ende der Projektion des Gewindestegs-Fußes oszilliert. Ferner ist in der Abwicklung gut zu erkennen, dass sich die axiale Höhe der Gewindesteg-Kopfflächen 37 zum Fußende 18 hin ständig verkleinert.

## Patentansprüche

1. Kieferimplantat (10) mit einem Implantatkörper (12), der ein Kopfende (16) zur Befestigung eines prothetischen Implantataufbaus und ein Fußende (18) zum Einsetzen in einen Patientenkiefer aufweist, wobei der Implantatkörper (12) aufweist:
an dem Kopfende (16) eine ovale Öffnung (20) mit einem Öffnungsrand (22), wobei der Öffnungsrand (22) in einer Öffnungsebene (24) liegt, die mit einem Neigungswinkel (a) von 75° bis 45° zur Implantatkörper-Axialen (14) geneigt ist, so dass der Implantatkörper (12) an seiner spitzwinkeligen Langseite (28) axial länger ist als an seiner stupfwinkligen Kurzseite (26), und
eine außenseitige Gewindestruktur (30) zum Einschrauben des Implantatkörpers (12) in einen Kieferknochen, wobei
die Gewindestruktur (30) einen auf einer kontinuierlichen Schraubenlinie mit konstanter Steigung um die Axiale (14) verlaufenden und von einem Körperkern (32) seitlich abragenden Gewindesteg (34) aufweist, und
der Gewindesteg (34) keilartig ausgebildet ist, eine dem Fußende (18) zugewandte Unterseite (38) und eine dem Kopfende (16) zugewandte Oberseite (36) aufweist, und zwischen der Oberseite (36) und der Unterseite (38) einen Keilwinkel (e) einschließt,
**dadurch gekennzeichnet, dass**
die Winkelhalbierende (50) des Keilwinkels (e) an der Langseite (28) mit der Implantatkörper-Axialen (14) kopfseitig einen Kippwinkel (b) kleiner 90° und auf der Kurzseite (26) einen Kippwinkel(c)größer 90° einschließt.

2. Kieferimplantat (10) nach Anspruch 1, wobei der Gewindesteg-Keilwinkel (e) über den Umfang konstant ist.

3. Kieferimplantat (10) nach einem der vorangegangenen Ansprüche, wobei die Gewindesteg-Oberseite (36) und/oder die Gewindesteg-Unterseite (38) eben ausgebildet sind.

4. Kleferimplantat (10) nach einem der vorangegangenen Ansprüche, wobei sich der Implantat-Körperkern (32) zum Fußende (18) hin verjüngt, vorzugsweise kegelartig verjüngt.

5. Kieferimplantat (10) nach einem der vorangegangenen Ansprüche, wobei sich die radiale Gewindestegtiefe (d) zum Fußende (18) hin vergrößert.

6. Kieferimplantat (10) nach Anspruch 4 und 5, wobei sich die radiale Gewindestegtiefe (d) derart zum Fußende (18) hin vergrößert, dass der Außenradius (r) des Implantatkörpers (12) über mehrere Umläufe konstant ist.

7. Kieferimplantat (10) nach einem der vorangegangenen Ansprüche, wobei der Implantatkörper (12) an seinem Kopfende (16) mindestens einen geschlossenen erhabenen Stützring (40) aufweist, dessen Ringebene parallel zu der Öffnungsebene (24) ist.

8. Kieferimplantat (10) nach einem der vorangegangenen Ansprüche, wobei der Gewindesteg (34) im Querschnitt trapezartig ausgebildet ist.

## Claims

1. A jaw implant (10) comprising an implant body (12) comprising a top end (16) configured to fasten a prosthetic implant abutment, and a base end (18) configured to be inserted into a patient's jaw, said implant body (12) comprising:
an oval opening (20) disposed at the top end (16), the oval opening comprising an opening edge (22), said opening edge (22) lying in an opening plane (24) which is inclined with an angle of inclination (a) of 75° to 45° with respect to an implant body axial line (14) so that the implant body (12) has an axial length on the acute-angled long side (28) which is longer than on the obtuse-angled short side (26); and
an external thread structure (30) configured to thread the implant body (12) into a jaw bone, wherein
the external thread structure (30) comprises a thread web (34) which extends on a continuous screw line with a constant pitch around the axial line (14) and which is configured to protrude laterally from the body core (32), and
the thread web (34) has a wedge-like shape and comprises a lower side (38) facing the base end (18), an upper side (36) facing the top end (16), and a wedge angle (e) disposed between the upper side (36) and the lower side (38),
**characterized in that**
at the top side, a bisecting line (50) of the wedge angle (e) and the axial line (14) of the implant body form a tilt angle (b) which, on the long side, is smaller than 90° and a tilt angle (c) which, on the short side (26) is larger than 90°.

2. The jaw implant (10) as recited in claim 1, wherein the wedge angle (e) of the web is constant over the circumference.

3. The jaw implant (10) as recited in one of the preceding claims, wherein at least one of the upper side (36) of the web and the lower side (38) of the web is planar.

4. The jaw implant (10) as recited in one of the preceding claims, wherein the implant body core (32) is configured to taper down, preferably conically, to the base end (18).

5. The jaw implant (10) as recited in one of the preceding claims, wherein a radial web depth (d) increases towards the base end (18).

6. The jaw implant (10) as recited in claims 4and 5, wherein the radial web depth (d) increases towards the base end (18) such that the outer radius (r) of the implant body (12) is constant for a plurality of turns.

7. The jaw implant (10) as recited in one of the preceding claims, wherein the implant body (12) further comprises at least one closed raised support ring (40) disposed at the top end (16), whose ring plane is parallel to the opening plane (24).

8. The jaw implant (10) as recited in one of the preceding claims, wherein the thread web (34) further comprises a trapezoidal cross section.

## Revendications

1. Implant dentaire (10) avec un corps d'implant (12) ayant une extrémité de tête (16) pour la fixation d'un pilier implantaire prosthétique et une extrémité de pied (18) pour l'insertion dans une mâchoire d'un patient, ledit corps d'implant (12) comprenant:
à l'extrémité de tête (16), une ouverture ovale (20) avec un bord d'ouverture (22), ledit bord d'ouverture (22) étant situé dans un plan d'ouverture (24) incliné sous un angle d'inclinaison (a) de 75° à 45° par rapport à ligne axiale du corps d'implant (14) de sorte que ledit corps d'implant (12) a une longueur axiale à son coté long (28) à angle aigu qui est supérieure à celle du coté court (26) à angle obtus, et
une structure de filetage extérieure (30) pour visser ledit corps d'implant (12) dans un os de mâchoire,
ladite structure de filetage (30) ayant un filet (34) s'étendant autour de la ligne axiale (14) sur une ligne d'hélice continue à pente constante et saillant latéralement d'un noyau du corps (32), et
ledit filet (34) étant en forme de coin, comprenant une face inférieure (38) orientée vers l'extrémité de pied (18) et une face supérieure (36) orientée vers l'extrémité de tête (16), et formant un angle de coin (e) entre la face supérieure (36) et la face inférieure (38),
**caractérisé en ce que**,
coté tête, la bissectrice (50) dudit angle de coin (e) forme à son coté long (28) un angle d'inclinaison (b) inférieur à 90° et, à son coté court (26), un angle d'inclinaison (c) supérieur à 90° avec la ligne axiale du corps d'implant (14).

2. Implant dentaire (10) selon la revendication 1, dans lequel l'angle de coin (e) du filet est constant sur tout le pourtour.

3. Implant dentaire (10) selon l'une quelconque des revendications précédentes, dans lequel la face supérieure (36) du filet et/ou la face inférieure (38) du filet sont planes.

4. Implant dentaire (10) selon l'une quelconque des revendications précédentes, dans lequel ledit noyau du corps (32) dudit implant s'effile vers l'extrémité de pied (18), de préférence de manière conique.

5. Implant dentaire (10) selon l'une quelconque des revendications précédentes, dans lequel la profondeur radiale (d) du filet augmente vers l'extrémité de pied (18).

6. Implant dentaire (10) selon les revendications 4 et 5, dans lequel la profondeur radiale (d) du filet augmente vers l'extrémité de pied (18) de sorte que le rayon extérieur (r) dudit corps d'implant (12) est constant pour plusieurs tours.

7. Implant dentaire (10) selon l'une quelconque des revendications précédentes, dans lequel ledit corps d'implant (12) comprend, à l'extrémité de tête (16), au moins un anneau de support (40) fermé, en relief, dont le plan d'anneau est parallèle au plan d'ouverture (24).

8. Implant dentaire (10) selon l'une quelconque des revendications précédentes, dans lequel ledit filet (34) présente une section transversale trapézoïdale.
